# DEMANDE DE BREVET EUROPEEN

(11) **EP 1 674 850 A1**
(43) Date de publication de la demande: **28.06.2006**
(21) Numéro de dépôt: 04405798.2
(22) Date de dépôt: 23.12.2004
(51) Int. Cl.: G01N 3/42

(54) **Tête de mesure pour instrument de nano-indentation et procédé de mesure utilisant une telle tête**

(71) Demandeur: CSM Instruments SA, 2034 Peseux (CH)
(72) Inventeur: Woirgard, Jacques, 86330 La Grimaudière (FR); Bellaton, Bertrand, 2000 Neuchâtel (CH); Consiglio, Richard, 2000 Neuchâtel (CH)
(74) Mandataire: GLN

(57) **Abrégé**

La tête de mesure de l'invention utilise un axe de mesure et un axe de référence ayant, chacun, leurs propres moyens d'actuation (A1, A2) et leurs propres moyens de mesure du déplacement (C1 à C3) et de mesure de la force appliquée (C1, K1 et C2, K2). La mesure par indentation peut donc être faite par rapport à une référence dont la force d'application sur l'échantillon (E) est contrôlée précisément.

Le contrôle indépendant de l'axe de référence permet de s'affranchir de toute perturbation de l'échantillon et/ou de l'instrument de mesure lui-même, par exemple, par suite d'une variation de la température.

## Description

La présente invention concerne généralement les instruments de mesure par nano-indentation et, plus particulièrement une tête de mesure pour un tel instrument ainsi que son procédé d'utilisation, ladite tête utilisant un référencement actif de la surface de l'échantillon à mesurer.

La méthode de mesure par indentation instrumentée ("Depth-Sensing Indentation", ou DSI, selon la terminologie anglo-saxonne) est l'une des plus utilisées pour déterminer certaines propriétés mécaniques des matériaux tels, par exemple, que le module d'élasticité et la dureté. Cette méthode consiste à appliquer une force croissante puis décroissante sur un échantillon par l'intermédiaire d'une pointe, ou indenteur, de forme déterminée de façon à étudier et à relever, en continu et simultanément, d'une part, les valeurs de la charge, respectivement de la décharge, appliquée sur l'échantillon et, d'autre part, la profondeur de pénétration de l'indenteur. Les forces mises en jeu peuvent être extrêmement faibles, typiquement de l'ordre de quelques micro-Newton (µN), et les déplacements de l'indenteur à mesurer de l'ordre du nanomètre (nm). On parle alors de nano-indentation.

Une tête de mesure par nano-indentation doit donc être capable d'appliquer une force sur un échantillon via un indenteur et de déterminer la force appliquée ainsi que la pénétration correspondante de l'indenteur. Parmi les instruments existants de mesure par nano-indentation, on peut citer le "Nano Hardness Tester", ou NHT, commercialisé par la demanderesse ou encore l'instrument "Tribolndenter®" de la société Hysitron Inc. La technologie utilisée pour la tête de mesure de ce dernier instrument est, par ailleurs, décrite dans le brevet US No. 5,553,486. Les têtes de mesure de l'art antérieur appliquent la force désirée via un actuateur électrodynamique (électro-aimant) ou électrostatique et elles possèdent un capteur de déplacement (généralement capacitif) mais pas de capteur de force. La force appliquée à l'échantillon est alors déduite de la force engendrée par l'actuateur, par exemple calculée à partir du courant ou de la tension appliquée à ce dernier, et de la raideur des lames de ressort supportant l'indenteur. Il s'agit donc d'une méthode de mesure indirecte de la force appliquée.

Avec les dispositifs cités de l'art antérieur se posent plusieurs problèmes, tels que les suivants:
1) Dérive thermique. Une mesure de nano-indentation standard dure environ une minute. Durant cette période, tout changement de température aura pour conséquence une variation dimensionnelle des composants mécaniques de l'instrument de mesure (dilatation ou contraction thermique). Le problème est encore aggravé si l'instrument utilise un actuateur électrodynamique qui produit lui-même de la chaleur et ce, en fonction de la force engendrée. Par exemple, dans le cas d'un système sans référence, si l'on considère un chemin de 30 cm entre la pointe de l'indenteur et la surface de l'échantillon via le bâti de l'instrument en acier (coefficient de dilatation thermique de l'acier égal à 10x10⁻⁶ /°C), une variation de 0.1 °C durant la période de mesure conduira à une erreur de mesure en profondeur de l'ordre de 300nm, ce qui est disproportionné vis-à-vis des profondeurs de pénétration qui, elles, sont fréquemment inférieures à 100 nm. Les parades actuelles pour minimiser les variations thermiques combinent l'utilisation d'enceintes thermostatées coûteuses à une action consistant à mesurer la dérive à un instant donné et à appliquer une correction de cette dérive à la totalité de la mesure de nano-indentation. De telles parades conduisent à des temps de cycle très longs (attente de la stabilisation thermique dans l'enceinte) et se basent sur l'hypothèse arbitraire que la dérive thermique demeure constante tout au long de la mesure.
2) Influence de la raideur du bâti de l'instrument et de la liaison bâti-échantillon . Lorsqu'on applique une force sur l'indenteur, celle-ci entraîne non seulement une pénétration de l'indenteur dans l'échantillon mais également une déformation de l'ensemble porte-échantillon/instrument proportionnelle à la complaisance (ou "compliance" selon la terminologie anglo-saxonne qui signifie capacité à se déformer sous l'effet d'une contrainte) de cet ensemble. Cette déformation conduit à une surestimation de la profondeur de pénétration et nécessite une correction ultérieure par soustraction de la valeur estimée de la complaisance. Une solution, déjà utilisée par la demanderesse pour contrer ce problème, consiste à faire reposer la tête de mesure directement sur l'échantillon via une pièce de référence et, ensuite, à mesurer la profondeur de pénétration directement entre cette référence et l'indenteur. Tout mouvement parasite (que ce soit d'origine thermique ou du fait de la complaisance du bâti) sera ainsi largement atténué. L'un des problèmes est, dans ce cas, que la totalité du poids de la tête de mesure repose sur l'échantillon, ce qui pose des problèmes sur les matériaux mous ou présentant du fluage car, dans ce cas, la résolution d'un problème en crée de nouveaux.
3) Indépendance des capteurs de force et de déplacement. Comme indiqué plus haut, les têtes existantes de nano-indentation sont équipées d'un seul actuateur et d'un seul capteur (capteur de déplacement). L'absence d'un capteur de force indépendant pose deux problèmes. Premièrement, la force n'est pas directement mesurée mais estimée, ce qui peut être une source d'erreur, et, deuxièmement, plusieurs modes de sollicitation très intéressants - telle l'indentation à taux de déformation constant par exemple - ne peuvent être complètement mis en oeuvre car ils nécessitent un pilotage qui tienne compte, simultanément, de la profondeur de pénétration et de la force appliquée.

Le but de cette invention est donc de permettre une mesure de nano-indentation libérée des contraintes précédemment citées et ainsi d'obtenir une mesure plus précise et plus fiable du module d'élasticité et de la dureté à l'échelle nanométrique. Ce but est atteint grâce à la tête de mesure définie dans la revendication indépendante. Des exemples de réalisation particulièrement avantageux sont définis dans certaines revendications dépendantes. Un procédé de mesure utilisant la tête de mesure de l'invention fait l'objet d'autres revendications dépendantes.

L'invention est basée sur l'idée d'utiliser un axe de mesure et un axe de référence ayant, chacun, leurs propres moyens d'actuation et leurs propres moyens de mesure du déplacement et de mesure de la force appliquée. La mesure par indentation peut donc être faite par rapport à une référence dont on contrôle la force d'application sur l'échantillon. Ainsi est-il possible de réaliser ce qu'on appelle un référencement actif de la surface de l'échantillon à mesurer, c'est-à-dire que le contrôle indépendant de l'axe de référence permet de s'affranchir de tout mouvement parasite de la surface de l'échantillon et/ou de l'instrument de mesure lui-même, par exemple, par suite d'une variation de la température, d'une déformation du bâti ou de la liaison bâti-échantillon.

La tête de mesure selon l'invention est, de plus, conçue de manière à ne pas créer de chaleur et à être aussi insensible que possible à tout changement de la température ambiante. Sa mise en oeuvre ne nécessite donc pas d'être placée dans une enceinte thermostatée.

D'autres objets, caractéristiques et avantages de la présente invention apparaîtront à la lecture de la description suivante faite à titre d'exemple non limitatif et en relation avec les dessins annexés dans lesquels:
- La figure 1 montre un exemple de réalisation de la tête de mesure selon l'invention;
- La figure 2 est un diagramme explicatif de la tête de mesure de la figure 1;
- Les figures 3a et 3b représentent, respectivement, un actuateur piézoélectrique à amplification et un ressort, tels qu'utilisés dans la tête de mesure de la figure 1 ;et
- La figure 4 montre un exemple de circuit utilisé pour asservir l'actuateur de l'axe de référence de la tête de mesure de la figure 1.

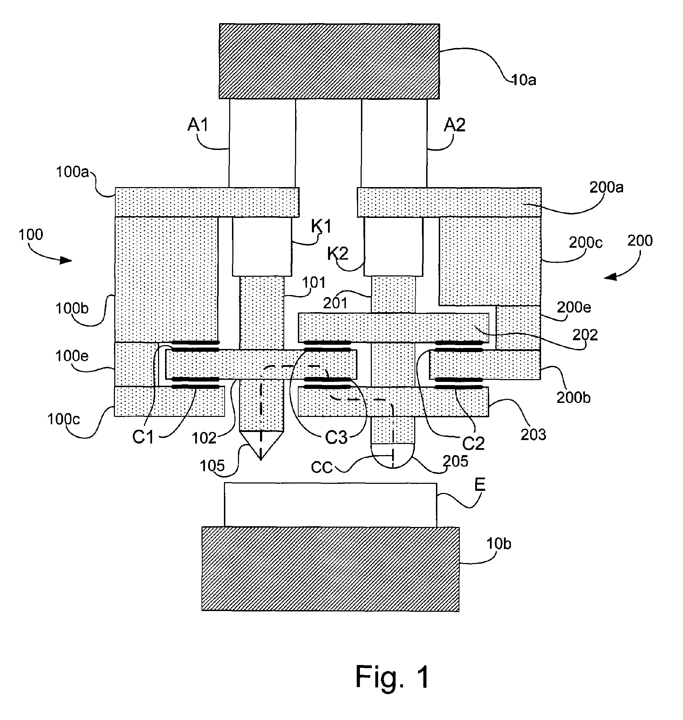

Un exemple de réalisation d'une tête de mesure par nano-indentation selon les principes de l'invention est schématiquement représenté à la figure 1. Cette tête de mesure présente, attachés au bâti 10 de l'instrument de mesure, deux axes symétriques et indépendants, l'un des axes correspondant à l'indenteur lui-même et le deuxième axe correspondant à la référence. Ainsi, pour l'axe correspondant à l'indenteur et appelé axe de mesure, trouve-t-on un actuateur A1, de préférence de type piézoélectrique, attaché au bâti 10a, un ressort K1 et une tige 101 se terminant par l'indenteur 105. La tige 101 comporte un élément transversal 102 qui porte des électrodes inférieure et supérieure, lesquelles coopèrent avec des électrodes correspondantes sur les parties 100b et 100c du corps 100 pour constituer un capteur de force sous la forme de deux condensateurs C1, montés de manière différentielle de façon à mesurer la déformation du ressort K1. Le corps 100, qui comporte les parties 100a à 100e, est fixé, par sa partie 100a, à l'actuateur A1, d'une part, et au ressort K1, d'autre part. Pour l'axe correspondant à la référence et appelé axe de référence, on trouve un actuateur A2, également attaché au bâti 10a et de type piézoélectrique, un ressort K2 et une tige 201 se terminant par une tête de référence 205. La tige 201 comporte des éléments transversaux 202 et 203 qui portent, sur leur face interne, des électrodes. Ces électrodes coopèrent, d'une part, avec les électrodes correspondantes portées par l'élément transversal 102 pour former un capteur de profondeur de pénétration C3 et, d'autre part, avec des électrodes correspondantes sur la partie 200b du corps 200 pour former un capteur de force appliquée, de façon à mesurer la déformation du ressort K2. Comme pour le capteur C1, les capteurs C2 et C3 sont constitués de manière à former, chacun, deux condensateurs à montage différentiel. Le corps 200, qui comporte les parties 200a à 200e, est fixé, par sa partie 200a, à l'actuateur A2, d'une part, et au ressort K2, d'autre part. La figure 1 montre encore un porte-échantillon 10b sur lequel peut être fixé l'échantillon E à mesurer. Le porte-échantillon 10b est relié au bâti 10a de l'instrument de mesure par des moyens de positionnement (non représentés) permettant d'amener l'échantillon en position voulue (x, y et z) sous la tête de mesure. Bien entendu, ces moyens de positionnement sont connus de l'homme de métier et ne seront donc pas décrits plus avant.

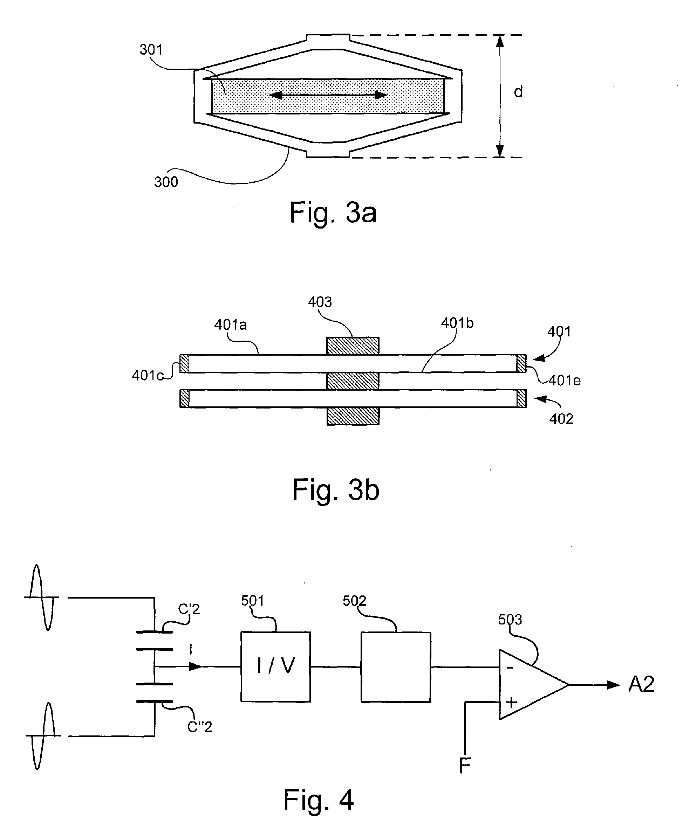

Les corps 100 et 200 doivent être parfaitement rigides, avoir une masse aussi faible que possible et présenter un coefficient de dilatation thermique également aussi faible que possible. Le verre céramique, commercialisé par la société Schott sous la marque Zerodur®, satisfait aux conditions énoncées. Ce matériau sera avantageusement utilisé pour réaliser également les tiges 101 et 201, ainsi que les éléments transversaux 102, 202 et 203. Le matériau de l'indenteur 105 et celui de la tête de référence dépendront de l'application. A titre d'exemple non limitatif, l'indenteur peut être en diamant et la tête de référence en acier. Comme indiqué précédemment, les actuateurs A1 et A2 seront, de préférence, de type piézoélectrique pour éviter toute production de chaleur. Un exemple de réalisation de tels actuateurs sera décrit en relation avec la figure 3a. Les ressorts K1 et K2 doivent avoir un poids et un encombrement faibles, présenter une bonne linéarité et être aussi insensibles que possible à la température. Un exemple de réalisation de tels ressorts sera décrit en relation avec la figure 3b. Les électrodes, formant les capteurs C1 à C3, peuvent être réalisées par dépôt d'une fine couche de chrome, constituant une couche d'accrochage, sur laquelle sera ensuite déposée une couche d'or.

Concernant la tête de mesure telle que décrite ci-dessus, il importe, en plus, qu'elle satisfasse aux conditions suivantes:
- la masse totale suspendue doit être aussi faible que possible;
- les deux axes de mesure et de référence doivent être aussi symétriques (mêmes longueurs et mêmes matériaux utilisés) que possible; et
- le chemin critique ou longueur de la boucle de mesure (ligne en pointillés CC allant de la pointe de l'indenteur à la pointe de la tête de référence) doit être minimal, ce qui implique que la distance entre l'indenteur et la pointe de référence soit également minimale.

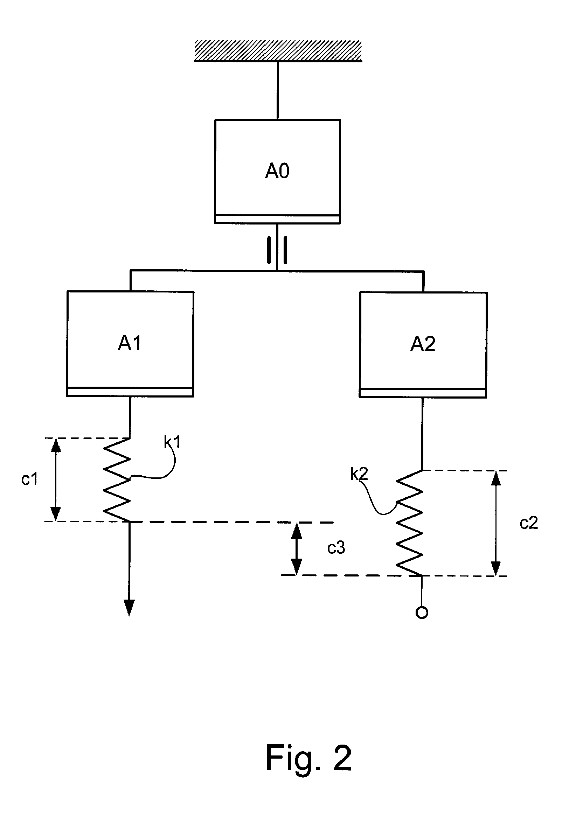

Le schéma de la figure 2 permet d'expliquer le fonctionnement de la tête de mesure de l'invention et, en particulier, celui des capteurs. Le bloc A0 symbolise les moyens de positionnement qui amènent l'échantillon E à la position voulue par rapport à la tête de mesure. Dans cette position, la tête de référence doit être en contact avec l'échantillon. La force F_{N}ref appliquée par cette dernière sur l'échantillon est égale à c2.k2, où c2 est le déplacement de la tige de référence par rapport au corps 200 mesuré par le capteur C2 (voir fig. 1) et k2 est la constante du ressort K2. De la même façon, la force appliquée F_{N} par l'indenteur est égale à c1.k1, où c1 est le déplacement de la tige de l'indenteur par rapport au corps 100 mesuré par le capteur C1 et k1 est la constante du ressort K1. Les forces F_{N} et F_{N}ref sont, bien entendu, engendrées par les actuateurs A1 et A2, respectivement. Enfin, c3 représente le déplacement entre la tige de référence et la tige de l'indenteur qui est mesuré par le capteur C3 (voir fig. 1) et qui constitue la profondeur de pénétration de l'indenteur.

La figure 3a montre un actuateur dit "à amplification" qui peut être utilisé dans la tête de mesure selon l'invention. Un tel actuateur est du type APA 120S, tel que commercialisé par la société Cedrat Technologies à Aix, en France. Il est commandé par une tension continue pouvant aller jusqu'à 150 volts et a une course de 100 µm. Il est constitué d'un barreau 301 en un matériau piézoélectrique (auquel est appliquée la tension continue par l'intermédiaire d'électrodes appropriées) et d'un cadre 300, en forme de losange et transformant un allongement horizontal du barreau en un déplacement vertical des angles libres du losange. L'actuateur est agencé de telle sorte que le déplacement vertical soit plus grand que l'allongement du barreau, d'où son nom d'actuateur à amplification. Il est bien entendu que d'autres actuateurs peuvent être utilisés du moment qu'ils satisfont aux conditions énoncées précédemment.

La figure 3b montre un type de ressort pouvant être utilisé dans la tête de mesure selon l'invention. Il comporte plusieurs structures rectangulaires (telles 401 et 402), constituées par deux lames flexibles (telles 401 a et 401 b) réunies par des éléments d'extrémité rigides (401c et 401e). Les structures rectangulaires sont réunies l'une à l'autre par des interfaces (403) fixées au centre des lames flexibles. Sous l'effet d'une force appliquée entre les parties externes de ces interfaces, les lames flexibles se déforment de manière linéaire. Le matériau avantageusement utilisé pour la réalisation de ces ressorts est l'invar, un alliage de fer et de nickel bien connu pour ses propriétés thermiques exceptionnelles. Là encore, l'exemple de réalisation décrit ci-dessus n'est pas limitatif et d'autres types de ressort peuvent également être utilisés.

La figure 4 montre, schématiquement, un exemple de circuit pouvant être utilisé pour commander l'actuateur A2 de façon à ce que la force appliquée par la tête de référence sur l'échantillon soit maintenue à une valeur constante de consigne. Les condensateurs C'2 et C"2 représentent le capteur C2 de la figure 1. Ils sont connectés en série et leur armature centrale est susceptible de bouger (lorsque la position de la tête de référence varie), modifiant ainsi la valeur des capacités de C'2 et C"2 sans, toutefois, changer la valeur de leur somme qui reste constante. Un premier signal sinusoïdal est appliqué sur l'armature externe de C'2 et un deuxième signal sinusoïdal, de même amplitude que le premier mais de phase opposée, est appliqué sur l'armature externe de C"2. Le signal résultant sur les armatures centrales de C'2 et C"2, qui est une mesure du déplacement de l'armature centrale, est appliqué à l'entrée d'un circuit de conversion courant/tension 501 dont la sortie, après filtrage par le filtre 502, est appliquée à l'entrée inverseuse d'un comparateur-amplificateur 503. L'entrée non-inverseuse du comparateur 503 reçoit une tension représentant la valeur F de la force à appliquer sur la tête de référence. Ainsi le circuit 503 délivre une tension de commande de l'actuateur A2 qui est proportionnelle à la différence entre la force mesurée à l'aide du capteur C2 et la force F de consigne.

Selon une variante avantageuse de l'invention, un circuit d'asservissement est également prévu pour asservir la commande de l'actuateur A1 de l'axe de mesure. Dans ce cas, toutefois, la force de consigne pourra ne pas être constante mais varier au cours d'un même cycle de mesure ou, même, d'un cycle à l'autre.

Selon une autre variante de l'invention, l'actuateur A1 de l'axe de mesure est commandé de telle sorte que le déplacement de l'indenteur soit asservi à une valeur donnée.

Le procédé d'utilisation de la tête de mesure selon l'invention comporte les étapes suivantes :
- les actuateurs piézoélectriques A1 et A2 sont prépositionnés de manière que la pointe de l'indenteur soit, en premier lieu, légèrement en retrait par rapport à la tête de référence ;
- ensuite, l'échantillon E est déplacé verticalement jusqu'à ce qu'il soit amené en contact avec la tête de référence ;
- l'actuateur piézoélectrique A2 est, dès lors, commandé de telle sorte qu'une force choisie soit appliquée à la tête de référence et ce, pendant toute la période de mesure ;
- l'indenteur est alors, par le biais de l'actuateur A1, amené en contact avec l'échantillon E, la force de contact étant contrôlée par le capteur de force (C2, K2) ;
- démarrage du cycle de mesure consistant à appliquer une force donnée à l'indenteur (force statique, simplement variable ou variable selon une séquence répétitive, etc.) et à mesurer simultanément la profondeur de pénétration de l'indenteur ;
- retrait, à la fin de la mesure ou des cycles de mesures, premièrement de l'indenteur, puis de la tête de référence et enfin de l'échantillon.

Bien que la présente invention ait été décrite en relation avec des exemples de réalisation particuliers, elle n'est en aucun cas limitée auxdits exemples et est susceptible de modifications et/ou variantes sans pour autant sortir de son domaine. En particulier, si dans la description qui précède les raideurs des ressorts K1 et K2 étaient supposées égales, il est également envisageable de les rendre différentes, ce qui permettrait, en permutant l'axe de mesure et l'axe de référence (ce qui revient à échanger l'indenteur et la pointe de référence), d'offrir très facilement deux gammes différentes de mesure sur le même instrument.

## Revendications

1. Tête de mesure pour instrument de nano-indentation ayant des moyens de positionnement propres à positionner un échantillon par rapport à ladite tête de mesure qui comporte :
• un axe de mesure fixé à un bâti destiné à être relié à l'instrument, incorporant des premiers moyens d'actuation (A1) et comportant un indenteur (105),
• des moyens (C3) de détection de la profondeur de pénétration dudit indenteur dans ledit échantillon ;
ladite tête de mesure étant **caractérisée en ce qu'**elle comprend, en outre, un axe de référence également fixé au bâti, incorporant des seconds moyens d'actuation (A2) et comportant une pointe de référence (205), ledit axe de mesure et ledit axe de référence comprenant, chacun, des moyens de détection de la force appliquée (C1, K1 et C2, K2) par lesdits premiers et seconds moyens d'actuation et **en ce que** la détection de ladite profondeur de pénétration est opérée par la mesure du déplacement de l'indenteur par rapport à la pointe de référence.

2. Tête de mesure selon la revendication 1, **caractérisée en ce que** l'axe de mesure et l'axe de référence comprennent, respectivement, des premiers éléments de ressort (K1), disposés entre lesdits premiers moyens d'actuation et l'indenteur et des seconds éléments de ressort (K2) disposés entre les seconds moyens d'actuation et la pointe de référence, ainsi que des capteurs de déplacement (C1, C2) de l'indenteur par rapport aux premiers moyens d'actuation, respectivement de la pointe de référence par rapport aux deuxièmes moyens d'actuation.

3. Tête de mesure selon la revendication 2, **caractérisée en ce que** lesdits capteurs de déplacement sont des capteurs capacitifs.

4. Tête de mesuré selon la revendication 1, **caractérisée en ce que** ladite détection de la profondeur de pénétration est également faite par un capteur capacitif.

5. Tête de mesure selon la revendication 3 ou la revendication 4, **caractérisée en ce que** lesdits capteurs capacitifs sont de type différentiel.

6. Tête de mesure selon l'une quelconque des revendications 1 à 5, **caractérisée en ce que** lesdits premiers et seconds moyens d'actuation sont de type piézoélectrique.

7. Tête de mesure selon l'une quelconque des revendications 1 à 6, **caractérisée en ce que** l'axe de mesure et l'axe de référence sont symétriques.

8. Tête de mesure selon l'une quelconque des revendications 1 à 7, **caractérisée en ce que** l'axe de mesure et l'axe de référence sont réalisés dans des matériaux à très faible coefficient de dilatation thermique.

9. Tête de mesure selon l'une quelconque des revendications 1 à 8, **caractérisée en ce qu'**elle comprend un premier circuit d'asservissement (501 à 503) desdits seconds moyens d'actuation afin de contrôler la force appliquée sur l'échantillon par ladite pointe de référence.

10. Tête de mesure selon l'une quelconque des revendications 1 à 9, **caractérisée en ce qu'**elle comprend un second circuit d'asservissement desdits premiers moyens d'actuation afin de contrôler la force appliquée par l'indenteur sur l'échantillon.

11. Tête de mesure selon l'une quelconque des revendications 1 à 9, **caractérisée en ce qu'**elle comprend un second circuit d'asservissement desdits premiers moyens d'actuation afin de contrôler la profondeur de pénétration de l'indenteur.

12. Procédé de mesure par nano-indentation à l'aide de la tête de mesure selon l'une quelconque des revendications précédentes **caractérisé en ce qu'**il comprend les étapes de:
- disposer un échantillon (E) à analyser sous la tête de mesure,
- prépositionner l'échantillon ainsi que les premiers et seconds moyens d'actuation de telle sorte que la pointe de référence soit en contact avec l'échantillon et l'indenteur légèrement en retrait par rapport à la surface dudit échantillon,
- commander les seconds moyens d'actuation de sorte que la pointe de référence applique une force donnée sur l'échantillon,
- commander les premiers moyens d'actuation pour amener l'indenteur en contact avec l'échantillon,
- effectuer la mesure en commandant les premiers moyens d'actuation de telle façon que l'indenteur applique une force voulue sur l'échantillon et en mesurant simultanément la profondeur de pénétration de l'indenteur dans l'échantillon,
- retirer l'indenteut puis la pointe de référence et ensuite l'échantillon à la fin de la mesure.

13. Procédé selon la revendication 8, **caractérisé en ce que** la mesure comprend une pluralité de cycles de pénétration selon une séquence donnée.
